# EUROPEAN PATENT APPLICATION

(11) **EP 2 790 316 A2**
(43) Date of publication of application: **15.10.2014**
(21) Application number: 14162058.3
(22) Date of filing: 27.03.2014
(51) Int. Cl.: H02P 21/14, H02P 21/00, H02P 6/18

(54) **Sensorless control apparatus and method of washing machine**

(30) Priority: 09.04.2013 KR 20130038752
(71) Applicant: Samsung Electronics Co., Ltd., Suwon-si Gyeonggi-do 443-742 (KR)
(72) Inventor: Lee, Sung Mo, Gyeonggi-do (KR)
(74) Representative: Walaski, Jan Filip

(57) **Abstract**

Disclosed herein is a sensorless control apparatus and method of a washing machine that reduces energy consumption according to an algorithm for detection of a position of a motor when the motor is activated under sensorless control. During activation of the motor under sensorless control, unnecessary energy consumed while the motor is arranged into at a predetermined angle is removed and energy consumption is reduced according to an algorithm of applying a plurality of vector voltages to check a vector for generation of maximum current and comparing magnitudes of currents around vectors for generation of the maximum current to set an initial angle.

## Description

The present invention relates to a sensorless control apparatus and method of a washing machine including a motor.

In general, a washing machine includes a motor to rotate a pulsator or a drum, and uses a brushless direct current (BLDC) motor having high efficiency and performance as the motor.

The BLDC motor used in the washing machine is configured in such a way that a permanent magnet is attached to a rotor having two or more polarities to generate a rotation driving force, and includes a stator around which a coil is wound and the rotator rotatably disposed on the stator.

The motor of the washing machine receives magnetic flux from the permanent magnet attached to the rotor, and thus, a position of the rotor needs to be accurately recognized for vector control. To this end, a separate position sensor such as a resolver, an encoder, etc. is installed to detect position information of the rotor. However, according to a method of detecting a position of a motor using a sensor, manufacturing costs and a circuit volume may increase due to use of the sensor, and the position of the motor is not capable of being detected when the sensor is damaged.

In order to overcome this problem, a separate position sensor is not installed and a sensorless control method of estimating a position of a rotor is used. However, when a motor is activated under sensorless control, an initial position of the motor is not capable of being known, and thus, the motor needs to be arranged at a specific position angle so as to be activated.

However, according to a method of arranging a motor at a specific position angle, current needs to be supplied to a motor while the motor is so arranged, and thus, unnecessary energy that is not used for actual rotation is consumed.

Therefore, it is an aspect of the present invention to provide a sensorless control apparatus and method of a washing machine that reduces energy consumption according to an algorithm for detection of a position of a motor when the motor is activated under sensorless control.

Additional aspects of the invention will be set forth in part in the description which follows and, in part, will be obvious from the description, or may be learned by practice of the invention.

In accordance with one aspect of the present invention, a sensorless control method of a washing machine including a motor includes applying a plurality of vector voltages during activation of the motor, measuring currents for respective vectors of the respective voltages, searching for a vector for generation of maximum current among measured vector currents, comparing magnitudes of vector currents around the vector for generation of the maximum current, and setting an initial angle of the motor according to a magnitude of the vector current.

The motor may include a stator including a coil wound thereabout, and a rotor rotatably disposed on the stator.

The applying may include applying the plural vector voltages to the stator.

The measuring may include measuring a magnitude of current varying according to a position of the stator when the plural vector voltages are applied to the stator.

The maximum current may be generated when a vector voltage close to a pole N of the rotor is applied.

In accordance with another aspect of the present invention, a sensorless control apparatus of a washing machine includes a motor, and a controller to apply a plurality of vector voltages during activation of the motor, to measure currents for respective vectors, to search for a vector for generation of maximum current among measured vector currents, to compare magnitudes of vector currents around the vector for generation of the maximum current, and to set an initial angle of the motor.

The sensorless control apparatus may further include an inverter to convert a direct current (DC) voltage into three phase command voltages and to apply the three phase command voltages to the motor.

The sensorless control apparatus may further include a current measurer to measure three phase currents input to the motor.

The controller may detect an initial position of the motor at the set initial angle during the activation of the motor under sensorless control.

According to a sensorless control apparatus and method of a washing machine during activation of the motor under sensorless control, unnecessary energy consumed while the motor is appropriately arranged is removed to reduce energy consumption according to an algorithm of applying a plurality of vector voltages to check a vector for generation of maximum current and comparing magnitudes of currents around vectors for generation of the maximum current to set an initial angle.

These and/or other aspects of the invention will become apparent and more readily appreciated from the following description of the embodiments, taken in conjunction with the accompanying drawings of which:
FIG. 1 is a cross-sectional view of a structure of a washing machine according to an embodiment of the present invention;
FIG. 2 is a schematic diagram illustrating a structure of a motor illustrated in FIG. 1;
FIG. 3 is a block diagram of an overall structure of a washing machine according to an embodiment of the present invention;
FIG. 4 is a circuit diagram of a circuit for sensorless control of a motor of a washing machine according to an embodiment of the present invention;
FIG. 5 is a control block diagram illustrating a structure for sensorless control of a motor of a washing machine according to an embodiment of the present invention;
FIG. 6 is a flowchart illustrating a sensorless control algorithm of a motor of a washing machine according to an embodiment of the present invention;
FIG. 7 is a diagram of a space vector voltage of a motor of a washing machine according to an embodiment of the present invention;
FIG. 8 is a diagram of a waveform of current of sensorless control activation of a motor of a washing machine according to an embodiment of the present invention; and
FIG. 9 is an enlarged diagram of a waveform of current during initial activation of FIG. 8.

Reference will now be made in detail to the embodiments of the present invention, examples of which are illustrated in the accompanying drawings.

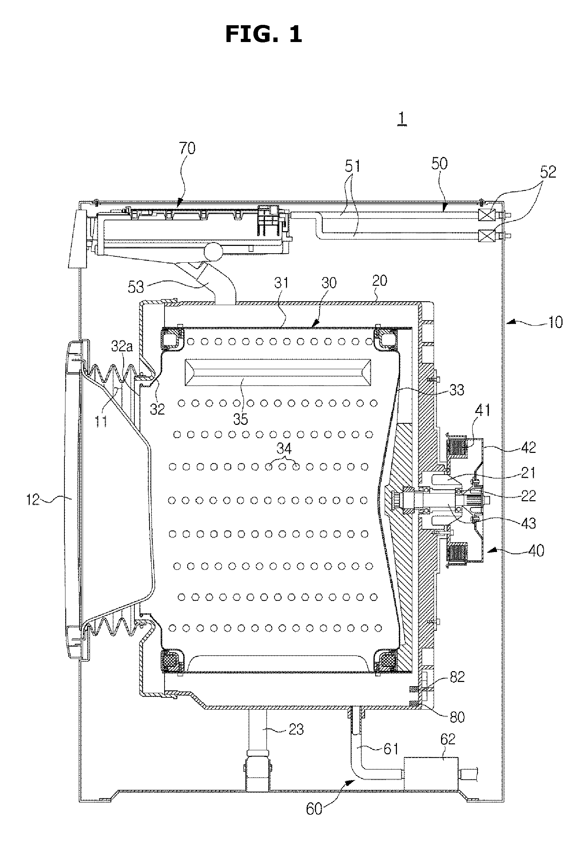

FIG. 1 is a cross-sectional view of a structure of a washing machine 1 according to an embodiment of the present invention.

In FIG. 1, the washing machine 1 according to the present embodiment includes a main body 10 that has an approximate box shape to form an outer appearance, a tub 20 installed in the main body 10, a drum 30 that is rotatably installed in the tub 20, and a motor 40 to drive the drum 30.

An inlet 11 is formed in a front surface of the main body 10 to put laundry in the drum 30. The inlet 11 is opened or closed by a door 12 installed at the front surface of the main body 10.

The drum 30 includes a cylindrical portion 31, a front plate 32 installed in front of the cylindrical portion 31, and a rear plate 33 installed behind the cylindrical portion 31. An opening 32a to load and unload laundry is formed in the front plate 32. A drive shaft 43 to transfer power of the motor 40 is connected to the rear plate 33.

A plurality of through holes 34 for circulation of wash water is formed in an outer circumferential surface of the drum 30 and a plurality of lifters 35 is installed at an inner circumferential surface of the drum 30 so as to raise and lower laundry during rotation of the drum 30.

The motor 40 includes a stator 41 fixed to a rear surface of the tub 20, a rotor 42 that rotates in conjunction with the stator 41, and the drive shaft 43 that includes one end fixed to a central portion of the rotor 42 and the other end disposed through the tub 20 and fixed to a central portion of the rear plate 33 of the drum 30.

In general, the motor 40 may be a universal motor including a field coil and an armature, a brushless direct current (BLDC) motor including a permanent magnet and an electromagnet, or the like. Any motor that is applicable to the drum 30 may be used as the motor 40.

The drive shaft 43 is installed between the drum 30 and the motor 40. One end of the drive shaft 43 is connected to the rear plate 33 of the drum 30. The other end of the drive shaft 43 extends out of a rear wall of the tub 20. When the motor 40 drives the drive shaft 43, the drum 30 connected to the drive shaft 43 rotates around the drive shaft 43.

A bearing housing 21 is installed at the rear wall of the tub 20 so as to rotatably support the drive shaft 43. The bearing housing 21 may be formed of an aluminium (Al) alloy and may be inserted into the rear wall of tub 20 during injection molding of the tub 20. Bearings 22 are installed between the bearing housing 21 and the drive shaft 43 such that the drive shaft 43 may smoothly rotate.

The tub 20 is supported by a damper 23. The damper 23 connects an internal bottom surface of the main body 10 to an external surface of the tub 20.

A water feed device 50 to feed water to the tub 20 and a detergent supply device 70 connected to the water feed device 50 to feed water transmitted through the water feed device 50 together with detergent to the tub 20 are installed above the tub 20. A sump device 60 to discharge water in the tube 20 out of the main body 10 is installed below the tub 20.

The water feed device 50 includes a water feed pipe 51 that connects an external water feed source (not shown) to the detergent supply device 70 in order to feed water (wash water or rinse water) into the tub 20, a water feed valve 52 installed in the middle of the water feed pipe 51 for control of water feed, and a connection pipe 53 to connect the tub 20 to the detergent supply device 70.

The sump device 60 includes a drain pipe 61 to guide water in the tub 20 to be discharged from the main body 10, and a drain pump 62 installed at the drain pipe 61 so as to discharge water through the drain pipe 61.

The detergent supply device 70 is connected to the tub 20 through the connection pipe 53 connected to a lower portion of the detergent supply device 70. Thus, water fed to the water feed pipe 51 is transmitted through the detergent supply device 70 and fed to the tub 20 through the connection pipe 53. This structure may allow water fed to the tub 20 to be transmitted through the detergent supply device 70 so as to supply detergent in the detergent supply device 70 together with water to the tub 20.

In addition, the washing machine 1 according to the present embodiment includes a water level sensor 80 and a temperature sensor 82 that are installed in the tub 20. The water level sensor 80 detects a frequency that varies according to a water level in order to detect an amount of water (i.e., a water level) in the tub 20 and the temperature sensor 82 detects a temperature of the water (wash water or rinse water) in the tub 20.

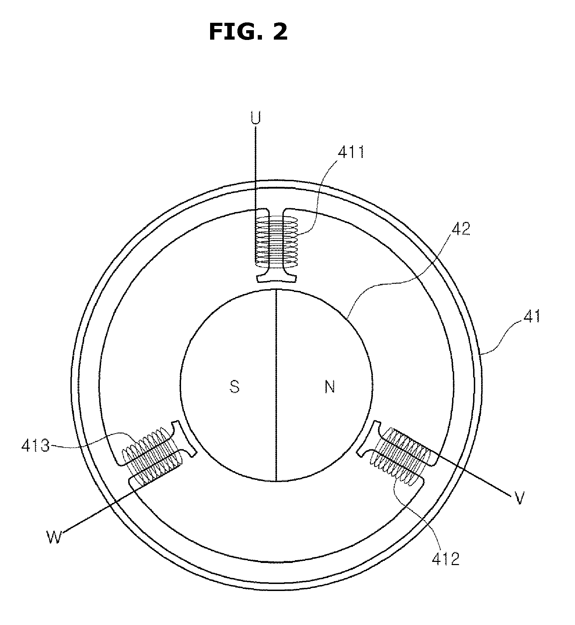

FIG. 2 is a schematic diagram illustrating a structure of the motor 40 illustrated in FIG. 1.

In FIG. 2, the motor 40 includes the stator 41 and the rotor 42. The stator 41 includes three coils U, W, and W 411, 412, and 413. The rotor 42 includes a permanent magnet and is disposed rotatably with respect to the stator 41. When a voltage is applied to the coils U, W, and W 411, 412, and 413 of the stator 41, the coils U, W, and W 411, 412, and 413 generate a magnetic field by which the rotor 42 rotates.

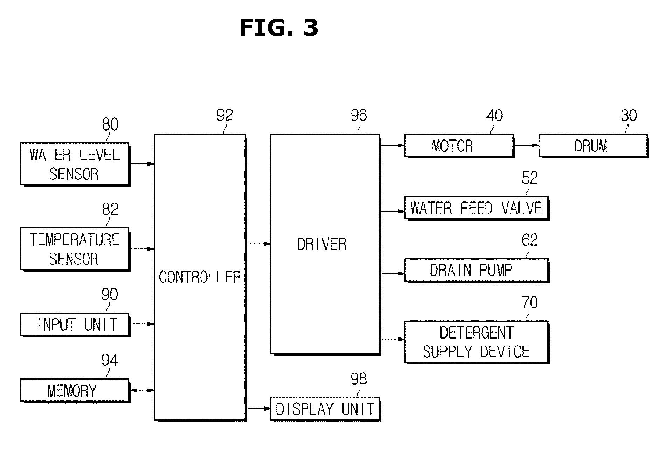

FIG. 3 is a block diagram of an overall structure of the washing machine 1 according to an embodiment of the present invention.

In FIG. 3, the washing machine 1 according to the present embodiment includes an input unit 90, a controller 92, a memory 94, a driver 96, and a display unit 98.

The input unit 90 may be used to input a command for execution of a washing course, rinse course, spin dry course, etc. of the washing machine 1 according to user manipulation, may include a key, a button, a switch, a touch pad, etc., and may include any device that generates predetermined input data according to manipulation such as push, touch, pressure, rotation, etc.

In addition, the input unit 90 includes a plurality of buttons (power, reservation, a temperature of wash water, soak, wash, rinse, spin dry, type of detergent, etc.) to input a user command related to an operation of the washing machine 1. The plural buttons include a course selection button to select a washing course (e.g., a standard course selected according to the type of laundry by the user among a plurality of washing courses such as a standard course, a wool course, a delicate course, etc.) according to the type of laundry to be put in the washing machine 1.

The controller 92 is a microcomputer to control an overall operation of the washing machine 1, such as wash, rinse, spin dry, etc. according to operating information input from the input unit 90 and sets a target wash water level and rinse water level, a target revolutions per minute (RPM) and driving factor (motor on-off time), wash and rinse time, a supply amount of detergent (in detail, time to input detergent), etc. in the selected washing course according to a weight of laundry (load).

The memory 94 may store control data for control of an operation of the washing machine 1, standard data used during control of the operation of the washing machine 1, operation data generated during a predetermined operation of the washing machine 1, setting information such as setting data input via the input unit 90 such that the washing machine 1 performs a predetermined operation, the number of times that the washing machine 1 performs a predetermined operation, use information containing model information of the washing machine 1, and fault information containing the reason or position of malfunction in case of malfunction of the washing machine 1.

The driver 96 drives the motor 40, the water feed valve 52, the drain pump 62, and the detergent supply device 70, which are related to an operation of the washing machine 1, according to a drive control signal of the controller 92.

The display unit 98 displays an operation state of the washing machine 1 and a state of user manipulation according to a display control signal of the controller 92.

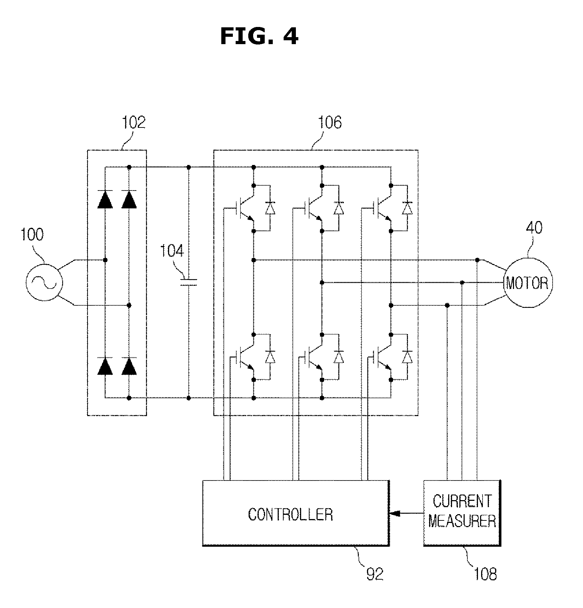

FIG. 4 is a circuit diagram of a circuit for sensorless control of a motor of a washing machine according to an embodiment of the present invention.

In FIG. 4, the motor control circuit according to the present embodiment includes a commutator 102 to commutate 220 V/60 Hz alternating current (AC), supplied by a commercial power source 100, a smoothing electrolytic capacitor 104 connected to the commutator 102, to smooth the commutated direct current (DC) voltage and to accumulate electric energy, an inverter 106 connected to the smoothing electrolytic capacitor 104, to convert the DC voltage output from the smoothing electrolytic capacitor 104 into three phase pulse AC U, V, and W having an arbitrary variable frequency through pulse width modulation (PWM) and to drive the motor 40, a current measurer 108 to measure the phase current of the motor 40, and the controller 92 to output a pattern of the PWM signal supplied to the inverter 106 and to control the inverter 106.

The inverter 106 is an intelligent power module (IPM) to connect six switching devices IGBT and a diode FRD using a three phase full bridge, to convert a DC voltage into three phase command voltages Vu*, Vv*, and Vw*, and to apply the three phase command voltages Vu*, Vv*, and Vw* to the motor 40.

The current measurer 108 may measure three phase currents Iu, Iv, and Iw input to the motor 40 and input the three phase currents Iu, Iv, and Iw to an analog/digital (A/D) converter of the controller 92, and may be appropriately configured using any known method.

For example, the current measurer 108 may be configured using a method of directly detecting three phase currents using a current transformer (CT) or a series shunt resistor from three phases of the motor 40, a method of detecting two phase currents using two CTs or a series shunt resistor and estimating the remaining one phase current based on the detected two phase currents, or the like.

The controller 92 is a microcomputer (MCU) to control on/off of six switching devices of the inverter 106 and to generate three phase AC with an arbitrary voltage and an arbitrary frequency and drives the motor 40 under PWM control using a general known technology.

In addition, the controller 92 detects a DC voltage (Vdc) linked to the smoothing electrolytic capacitor 104 for rotation control of the inverter 106 and measures phase current of the motor 40 via the current measurer 108 to output a pattern of a PWM signal supplied to the inverter 106.

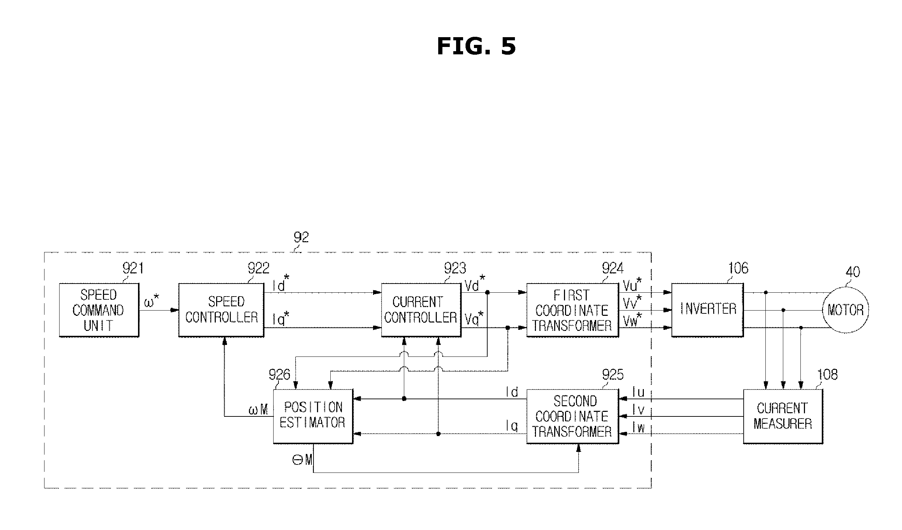

FIG. 5 is a control block diagram illustrating a structure for sensorless control of the motor 40 of a washing machine according to an embodiment of the present invention.

In FIG. 5, the controller 92 for sensorless control of the motor 40 includes a speed command unit 921, a speed controller 922, a current controller 923, a first coordinate transformer 924, a second coordinate transformer 925, and a position estimator 926.

The speed command unit 921 outputs a command speed ω* to be applied to the rotor 42 and transmits the command speed ω* to the speed controller 922 for rotation control of the motor 40.

The speed controller 922 performs proportional integral (PI) control calculation on a difference between the command speed ω* of a rotor, input from the speed command unit 921, and an estimated speed ωM of the rotor 42.

In addition, the speed controller 922 generates command currents Id* and Iq* such that the estimated speed ωM of the rotor 42 may follow the command speed ω*. Here, the speed controller 922 may generate optimum command current according to an operating point of the motor 40.

The current controller 923 performs PI control calculation on a difference between the command currents Id* and Iq* input from the speed controller 922 and measured currents Id and Iq input from the second coordinate transformer 925. Then, the current controller 923 generates command voltages Vd* and Vq* such that the measured currents Id and Iq may follow the command currents Id* and Iq*.

The first coordinate transformer 924 converts the command voltages Vd* and Vq* input from the current controller 923 into three phase command voltages Vu*, Vv*, and Vw* to be input to the motor 40.

The second coordinate transformer 925 converts the three phase measured currents Iu, Iv, and Iw input from the current measurer 108 into two phase measured currents Iα and Iβ and converts the currents Iα and Iβ of a fixed coordinate system into currents Id and Iq of a rotary coordinate system based on an estimated position θM of the rotor 42.

The currents Iu, Iv, and Iw input to the motor 40 are measured by the current measurer 108. In this case, instead of detecting all three phase currents, the current measurer 108 may detect two phase currents, and then, calculate and measure the remaining one phase current. In addition, the measured currents Iu, Iv, and Iw are converted into digital data by an A/D converter (not shown) and then are input to the second coordinate transformer 925.

The position estimator 926 estimates position θM and speed ωM of the rotor 42 based on the measured currents Id and Iq input from the second coordinate transformer 925 and the command voltages Vd* and Vq* input from the current controller 923.

When the controller 92 activates the motor 40 under sensorless control, the controller 92 estimates an initial position of the motor 40 and activates the motor 40. In this case, an initial angle is set using measured current according to a voltage vector.

Hereinafter, processes and advantages of a sensorless control apparatus and method of a washing machine will be described.

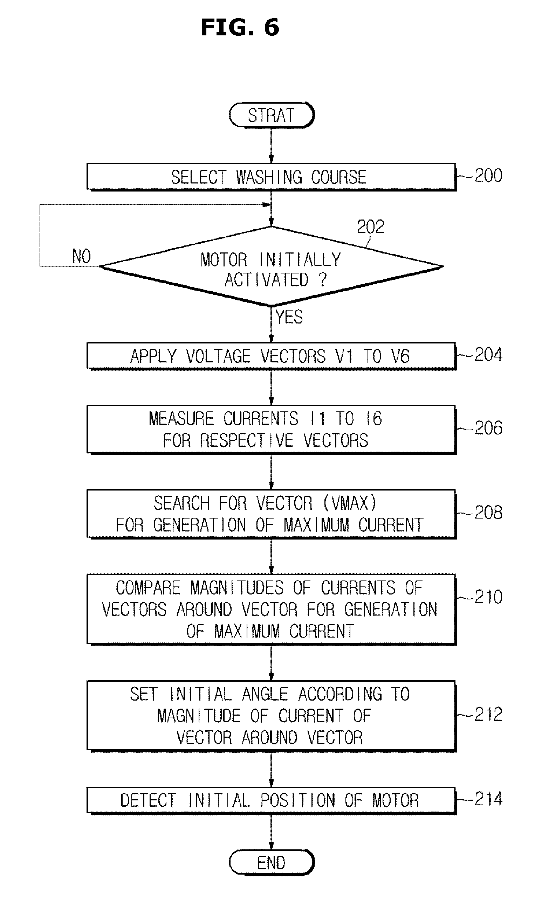

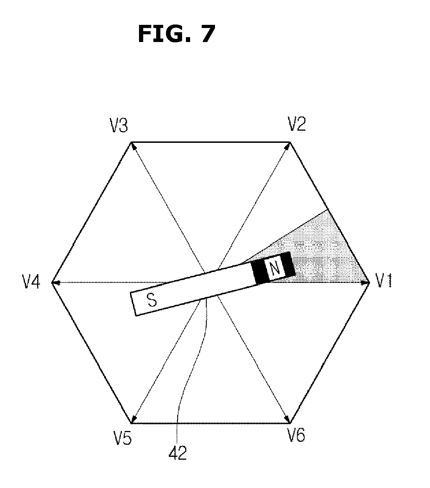

FIG. 6 is a flowchart illustrating a sensorless control algorithm of a motor of a washing machine according to an embodiment of the present invention. FIG. 7 is a diagram of a space vector voltage of a motor of a washing machine according to an embodiment of the present invention.

In FIG. 6, a user puts laundry in the drum 30 and manipulates buttons of the input unit 90 to select a washing course (e.g., standard course) according to a type of laundry (200). In this case, operating information of the washing course selected by the user is input to the controller 92 through the input unit 90.

Thus, the controller 92 detects a weight of the laundry in the drum 30 according to the operating information input from the input unit 90. In this case, the weight (load) of the laundry may be detected using any method among a method of detecting the weight based on an angular velocity and time to apply a duty voltage (90 V) to the motor until it reaches a predetermined duty voltage while the motor 40 rotates at a weight detection RPM (about 70 to 150 RPM), a method of detecting the weight using time for which a current speed reaches a predetermined speed (or a predetermined revolutions per minutes) using instantaneous acceleration of the motor 40, and a method of detecting the weight according to the second law of motion (torque=inertia X acceleration) by applying torque to the motor 40 for a predetermined period of time to directly or indirectly measure inertia of the drum 30, as disclosed in Japanese Patent Laid-Open Publication No. 2002-336593, Japanese Patent Laid-Open Publication No. 2004-267334, and Japanese Patent Laid-Open Publication No. Hei 07-90077.

Of course, the weight (load) of laundry may be detected using a load cell method among known methods.

When the weight (load) of laundry is detected, the controller 92 sets a motor RPM and driving factor (motor on-off time), a target wash water level and rinse water level, wash and rinse time, a supply amount of detergent (in detail, time to input detergent), etc. according to the detected weight (load) of laundry.

A case in which the motor RPM and driving factor (motor on-off time), the target wash water level and rinse water level, the wash and rinse time, and the time to input detergent are set according to the detected weight (load) of laundry corresponds to a case in which the user does not input a separate additional command regarding an operation of the washing machine 1. Of course, when the user inputs the separate additional command regarding the operation of the washing machine 1, the motor RPM and driving factor (motor on-off time), the target wash water level and rinse water level, the wash and rinse time, and the time to input detergent are set according to the user command.

Thus, the controller 92 determines whether the motor 40 is initially activated in order to perform a washing course, a rinse course, or a spin dry course (202).

As a result of the determination in operation 202, when the motor 40 is initially activated, the controller 92 applies vector voltages V1 to V6 illustrated in FIG. 7 to the stator 41 of the motor 40 in order to detect an initial position of the motor 40 (204).

Then, currents I1 to I6 for respective vectors, which flow according to the applied vector voltages V1 to V6, are measured by the current measurer 108 and input to the controller 92 (206). In this regard, an inductance value varies according to a position of the rotor 42. Thus, when a predetermined voltage is applied, a magnitude of response current varies according to an impedance value.

That is, when vector voltages V1 to V6 are applied to the stator 41 of the motor 40, the magnitude of current flowing in the rotor 42 varies according to each vector voltage.

Thus, the controller 92 searches for a highest value, that is, a vector Vmax for generation of maximum current among six measured currents I1 to I6 (208). When a vector voltage close to a pole N of the rotor 42 is applied, impedance may be minimized to generate maximum current. For example, when a position of the rotor 42 is that illustrated in FIG. 7, a vector for generation of maximum current is V1.
Then, the controller 92 compares magnitudes of currents measured at vectors V2 and V6 around the vector V1 for generation of maximum current (210) and sets an initial angle of the motor 40 according to the magnitudes of currents measured at the vectors V2 and V6 around the vector V1 for generation of the maximum current (212). For example, when a position of the rotor 42 is that illustrated in FIG. 7, since current at the vector V1 is greater than current at the vector V6, the initial angle of the motor 40 is set to 15 degrees.

In this case, the set initial angle of the motor 40 is shown in Table 1 below.

**Table 1**

| NO. | Max | Comparison | Angle[deg] |
|---|---|---|---|
| 1 | I1 | I2 > I6 | 15 |
| 2 | I2 | I1 > I3 | 45 |
| 3 | I2 | I1 < I3 | 75 |
| 4 | I3 | 12 > 14 | 105 |
| 5 | I3 | I2 < 14 | 135 |
| 6 | I4 | I3 > I5 | 165 |
| 7 | I4 | 13 < I5 | 195 |
| 8 | I5 | I4 > I6 | 225 |
| 9 | I5 | I4 < I6 | 255 |
| 10 | I6 | I5 > I1 | 285 |
| 11 | I6 | I5 < I1 | 315 |
| 12 | I1 | I2 < I6 | 345 |

According to Table 1 above, an arrangement position of the motor 40 is set at resolution of 30 degrees within an electrical angle of 360 degrees and a position of the motor 40 is detected.

The controller 92 may detect an initial position of the motor 40 according to such sensorless control algorithm (214).

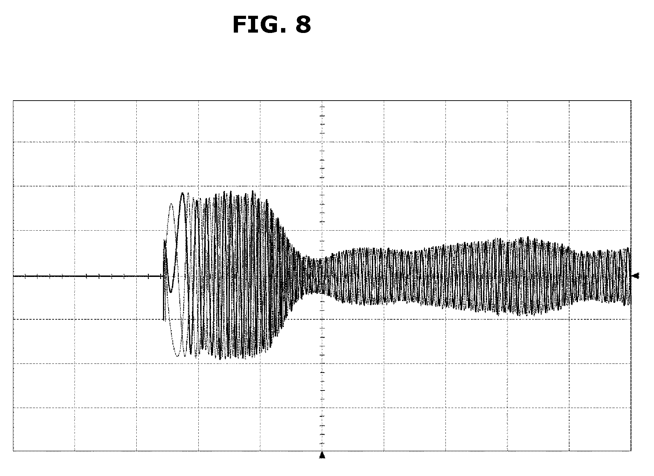

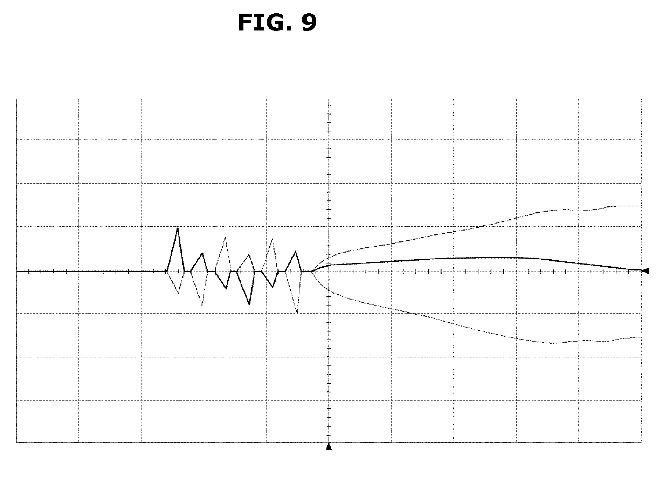

FIG. 8 is a diagram of a waveform of current of sensorless control activation of a motor of a washing machine according to an embodiment of the present invention. FIG. 9 is an enlarged diagram of the waveform of the current during initial activation of FIG. 8.

As seen from FIGS. 8 and 9, according to the sensorless control according to the present embodiment, the motor 40 is not compulsorily arranged at a predetermined position angle when the motor 40 is activated, and a current response waveform is checked when six vector values are applied initially to detect the initial position of the motor 40.

According to the present embodiment, a method of activating the motor 40 under sensorless control in the washing machine 1 of a drum type has been described as an example. However, embodiments of the present invention are not limited thereto. Alternatively, the same objectives and advantages as those of the embodiments of the present invention may also be obtained by a pulsator type automatic washing machine.

Although a few embodiments of the present invention have been shown and described, it would be appreciated by those skilled in the art that changes may be made in these embodiments without departing from the principles of the invention, the scope of which is defined in the claims.

## Claims

1. A sensorless control method of a washing machine comprising a motor, the sensorless control method comprising:
applying a plurality of vector voltages during activation of the motor;
measuring currents for respective vectors of the respective voltages;
searching for a vector for generation of maximum current among measured vector currents;
comparing magnitudes of vector currents around the vector for generation of the maximum current; and
setting an initial angle of the motor according to a magnitude of the vector current.

2. The sensorless control method according to claim 1, wherein the motor comprises:
a stator comprising a coil wound thereabout; and
a rotor rotatably disposed on the stator.

3. The sensorless control method according to claim 2, wherein the applying comprises applying the plural vector voltages to the stator.

4. The sensorless control method according to claim 3, wherein the measuring comprises measuring a magnitude of current varying according to a position of the stator when the plural vector voltages are applied to the stator.

5. The sensorless control method according to claim 4, wherein the maximum current is generated when a vector voltage close to a pole N of the rotor is applied.

6. A sensorless control apparatus of a washing machine, the sensorless control apparatus comprising:
a motor; and
a controller to apply a plurality of vector voltages during activation of the motor, to measure currents for respective vectors, to search for a vector for generation of maximum current among measured vector currents, to compare magnitudes of vector currents around the vector for generation of the maximum current, and to set an initial angle of the motor.

7. The sensorless control apparatus according to claim 6, further comprising an inverter to convert a direct current (DC) voltage into three phase command voltages and to apply the three phase command voltages to the motor.

8. The sensorless control apparatus according to claim 7, further comprising a current measurer to measure three phase currents input to the motor.

9. The sensorless control apparatus according to claim 7 or 8, wherein the controller detects an initial position of the motor at the set initial angle during the activation of the motor under sensorless control.

10. A washing machine comprising a sensorless control apparatus according to any one of claims 6 to 9.
